# EUROPÄISCHE PATENTANMELDUNG

(11) **EP 1 914 115 A2**
(43) Veröffentlichungstag der Anmeldung: **23.04.2008**
(21) Anmeldenummer: 07019431.1
(22) Anmeldetag: 04.10.2007
(51) Int. Cl.: B60Q 1/08

(54) **Scheinwerfersystem für Fahrzeuge, vorzugsweise für Kraftfahrzeuge**

(30) Priorität: 18.10.2006 DE 102006050236
(71) Anmelder: Schefenacker Vision Systems Germany GmbH, 71409 Schwaikheim (DE)
(72) Erfinder: Mack, Bernd, 73630 Remshalden (DE)
(74) Vertreter: Jackisch-Kohl, Anna-Katharina

(57) **Zusammenfassung**

Das Scheinwerfersystem hat einen verstellbaren Scheinwerfer und eine Vorrichtung zur Erfassung des Straßenverlaufs. Die Vorrichtung weist einen bildgebenden Sensor (5) mit einer Bildverarbeitungsvorrichtung (10) und einem Steuergerät (13) auf und leitet über den bildgebenden Sensor (5) ermittelte Bilder/Daten mittels der Bildverarbeitungsvorrichtung (10) und dem Steuergerät (13) Signale an Stellglieder oder Leuchtmittel der Scheinwerfer (14) zur Veränderung der Richtung der emittierenden Strahlen. Damit diese Veränderung bereits vor dem Richtungswechsel erfolgt, erzeugt die Bildbearbeitungsvorrichtung (10) aus den vom bildgebenden Sensor (5) ermittelten Bildern/Daten ein Signal, das eine Vorhersage des Straßenverlaufs ermöglicht und dem Lichtsteuergerät (13) zugeführt wird. Es sendet an die Stellglieder Signale zur vorausschauenden Richtungsänderung der Lichtstrahlen des Scheinwerfers (14). Ein solches Scheinwerfersystem kommt in Kraftfahrzeugen zum Einsatz.

## Beschreibung

Die Erfindung betrifft ein Scheinwerfersystem für Fahrzeuge, vorzugsweise für Kraftfahrzeuge, nach dem Oberbegriff des Anspruches 1.

Es sind Scheinwerfersysteme für Fahrzeuge bekannt, bei denen die Scheinwerfer mit entsprechenden Ausleuchtungsbereichen bei einem Richtungswechsel (zum Beispiel dem Befahren einer Kurve) mitlenken. Dieses Mitlenken kann beispielsweise durch eine mechanische Verbindung (Seilzugsystem) zwischen der Lenkung oder anderen schwenkenden Bauteilen beim Durchfahren einer Kurve gekoppelt und somit angetrieben sein.

Solch ein System funktioniert nur dann, wenn der Fahrzeuglenker in eine Kurve lenkt oder von seiner Fahrspur in eine andere Richtung abbiegt. Bei solchen Systemen ist das Mitlenken des Scheinwerfers über geometrische Lenkungsparameter mit der Lenkung gekoppelt und funktioniert zeitgleich mit dem Lenkvorgang. Alle diese Systeme haben kein echtes prädikatives Verhalten.

Des weiteren sind Systeme denkbar, die von Navigationssystemen mit GPS unterstützt werden.

Die ermittelten Daten werden mit Daten von Straßenkarten, die in heutigen Navigationssystemen hinterlegt sind, verglichen. Ebenso können aktuelle Positionsdaten über ein GPS-Satellitensystem ausgewertet werden. Die Kopplung zwischen reinen mechanischen Informationen des sich bewegenden Fahrzeuges mit hinterlegten Kartenmaterialdaten sowie aktuellen übermittelten Daten über GPS-Satellitensystemen ermöglichen es, beim Abbiegen oder Befahren einer Kurve zeitgleich oder vorausschauend entsprechend der gewünschten Richtungsänderung die Scheinwerfer mitzulenken. Es ist aktuelles Kartenmaterial nötig. Im Ausland treten Schwierigkeiten auf, da Kartenmaterial häufig fehlt oder kleine Straßen nicht verzeichnet sind. Auf vielen Fahrten in der näheren Umgebung, z.B. auf dem Weg zur Arbeit, zum Einkaufen und dergleichen, wird kein Navigationssystem verwendet; das System weiß dann nicht, wohin voraussichtlich gefahren wird. Somit kann mit diesen Systemen nicht vorausschauend gefahren werden.

Solche Scheinwerfersysteme sind bestenfalls für ein zeitgleiches Schwenken der Scheinwerfer beim Befahren der Kurve geeignet. Einfachere und ältere Systeme reagieren oft zeitversetzt, so daß das Schwenken der Scheinwerfer erst dann erfolgt, wenn bereits ein Einlenken in eine Kurve oder bei einem Abbiegen eingeleitet wurde.

Darüber hinaus sind weitere Systeme bekannt, bei denen die Fahrbahn und somit die Fahrtrichtung über einen Sensor detektiert werden. Beispiele für derartige Systeme sind Adaptive Cruise Control Systeme. Es sind auch Studien zu optischen Spurhaltungssystemen bekannt.

Zweck dieser Systeme ist es im Falle von Adaptive Cruise Control Systemen, einen Mindestabstand zu einem vorherfahrenden Fahrzeug zu halten bzw. im Fall von Spurhaltesystemen, den Fahrer vor dem Verlassen seiner Fahrspur zu warnen.

Der Erfindung liegt die Aufgabe zugrunde, das gattungsgemäße Scheinwerfersystem so auszubilden, so daß bereits vor dem Richtungswechsel oder einer Richtungsänderung ein Schwenken der Scheinwerfer entsprechend erfolgen kann.

Diese Aufgabe wird bei dem gattungsgemäßen Scheinwerfersystem erfindungsgemäß mit den kennzeichnenden Merkmalen des Anspruches 1 gelöst.

Beim erfindungsgemäßen Scheinwerfersystem wird eine Vorhersage des Straßenverlaufes ohne Verwendung von GPS-Daten oder Kartenmaterialdaten erreicht. Der bildgebende Sensor ermittelt Bilder/Daten des Umfeldes. Aus diesen Daten ermittelt die Bildbearbeitungsvorrichtung unter Zuhilfenahme weiterer fahrzeugspezifischer Informationen, zum Beispiel der Geschwindigkeit des Fahrzeugs, den Straßenverlauf vor dem Fahrzeug sowie die voraussichtliche weitere Fahrbewegung des Fahrzeugs. Dementsprechend können die Lichtstrahlen eingestellt werden. So kann beispielsweise, bevor ein Fahrtrichtungswechsel ansteht bzw. eingeleitet wird, der Ausleuchtbereich vor dem Fahrzeug entsprechend dieser Fahrtrichtungsänderung eingestellt werden. Hierzu wird vorzugsweise ein Richtungs- bzw. Geschwindigkeitsfaktor ermittelt, der beispielsweise über ein optisches System den Bereich vor dem Fahrzeug erfaßt und somit identifiziert, ob eine Richtungsänderung zu erwarten ist oder nicht bevorsteht. Diese umfeldspezifischen Bilder/Daten werden mit fahrzeugseitigen Daten, wie Fahrzeuggeschwindigkeit, gesetzte Fahrtrichtungsanzeiger und möglicherweise Lenkungswerte, verknüpft. Aus den umfeldseitigen Bildern/Daten und diesen fahrzeugseitigen Daten werden Signale erzeugt, mit denen eine vorausschauende Richtungsänderung der emittierenden Lichtstrahlen des Scheinwerfers möglich ist. Zusätzlich werden prediktive Annahmen getroffen; z.B. deutet eine Geschwindigkeitsreduzierung vor einer von einer Bildverarbeitungseinheit erkannten Straßenkreuzung auf einen Abbiegewunsch des Fahrers oder den Wunsch, sich zu orientieren bzw. eine Gefahrenstelle einzusehen. Eine breitere Ausleuchtung wird nötig. Weitere Informationen, wie unter anderem Setzen des Fahrtrichtungsanzeigers, Erkennen von Lenkbewegungen oder das Erkennen nur einer möglichen Abbiegerichtung präzisieren die Annahmen zum Fahrerwunsch.

Anhand der optisch erfaßten, umfeldseitigen Daten kann das Scheinwerfersystem beispielsweise Objekte am Rand der Fahrbahn oder die Fahrbahnmarkierungen identifizieren. Die Objekte können markante Gegenstände sein, die das System als statisch bestimmte Objekte festlegt. Durch eine Mehrzahl detektierter Bilder des vor dem Fahrzeug befindlichen Straßenverlaufs sowie dessen direkter Randumgebung werden Veränderungen der statischen Objekte ermöglicht. Das System erkennt somit, ob bei der weiterführenden Fahrt eine Kurve oder eine Abbiegung oder Kreuzung zu erwarten ist. Insbesondere wird durch die Verknüpfung dieser umfeldbedingten Daten mit den fahrzeugseitigen Daten zuverlässig eine vorausschauende Richtungsänderung und damit eine entsprechende Scheinwerfersteuerung gewährleistet.

Die statischen Objekte (markante Gegenstände) an den Fahrbahnrändern können in ihrer Positions- und Koordinatenänderung während der Fahrt des Fahrzeuges so ermittelt werden, daß das System bei dessen Auswertung Unterschiede feststellen und entsprechend dieser Unterschiede Vektoren als Bewegungs- oder auch Geschwindigkeitsvektoren bestimmen kann. Sollte sich der zu erwartende Straßenverlauf zu einer Seite hin verändern, wird das System bei allen markanten Objekten, wie beispielsweise dem Fahrbahnrand oder markanten Gegenständen, eine kontinuierliche seitliche Veränderung identifizieren und somit einen Bewegungsvektor festlegen. Entsprechend der Fahrtgeschwindigkeit des Fahrzeuges ändert sich somit auch die Größe bzw. Länge dieses Vektors, womit auch die Parameter der Geschwindigkeit bei zu erwartenden Fahrtrichtungsänderungen, insbesondere starken Fahrtrichtungsänderungen, wie Kreuzungen oder Abbiegungen, bestimmt werden können.

Durch solch ein vorausschauendes System, das unabhängig von gespeicherten Daten, wie Straßenkarten oder aktuellen Satellitendaten, arbeitet, ist eine kontinuierliche Ausleuchtungsanpassung während der Fahrt möglich. Diese kontinuierliche Ausleuchtungsanpassung verändert den Ausleuchtbereich der Scheinwerfer vorteilhaft stufenlos nach den gegebenen Richtungsänderungen und/oder Geschwindigkeiten des Fahrzeuges. Selbstverständlich können die erwähnten gespeicherten Daten unterstützend verwendet werden; sie sind aber für das erfindungsgemäße Scheinwerfersystem nicht zwingend erforderlich.

Somit kann vorteilhaft bei einer langsamen Fahrt die Ausleuchtungsweite reduziert und die Ausleuchtung der seitlichen Bereiche vor dem Fahrzeug vergrößert werden. Bei einer schnellen Fahrt kann beispielsweise die Ausleuchtung des Fahrzeuges im vorderen seitlichen Bereich reduziert werden, während die Ausleuchtung in Fahrtrichtung weiter voraus ausgerichtet wird. Bei einer schnellen Fahrt durch eine Kurve wird vorteilhaft weit nach vorne ausgeleuchtet, wobei entsprechend der Krümmung der Fahrtrichtungsänderung eine seitliche Erweiterung des Ausleuchtungsbereiches stattfindet.

Selbst bei einem stehenden Fahrzeug wird dieser Zustand erkannt; der Ausleuchtbereich wird dann eher einer Umfeld- und Positionsausleuchtung entsprechen.

Die Ausleuchtung kann stufenlos oder in fein gestaffelten Stufen (Schritt) erfolgen.

Für die möglichen Fallsituationen der vorderen und seitlichen Ausleuchtbereiche können beispielsweise im Steuersystem typische Kennfelder oder relevanten Berechnungsformeln hinterlegt sein. Alle weiteren Parameter oder Erfahrungswerte können bei solchen Steuerungen und Systemen beispielsweise als Binärcode in Speichern hinterlegt sein, so daß jederzeit eine entsprechende Ausleuchtung ermittelt werden kann.

Eine weitere Variante besteht darin, daß ein solches System quasi intelligent programmiert werden kann, wobei das System in der Lage ist, das Fahrverhalten eines Fahrers zu identifizieren und die im Speicher hinterlegten Kennfelder entsprechend angepaßt zur Berechnung von Ausleuchtungsbereichen zur Verfügung zu stellen. Solch eine individuelle Anpassung kann ständig erfolgen, was den großen Vorteil hat, daß entsprechend der Verkehrssituation oder der konditionellen Fähigkeiten des Fahrers entsprechende Ausleuchtungen angepaßt werden können.

Weitere Merkmale der Erfindung ergeben sich aus den weiteren Ansprüchen, der Beschreibung und den Zeichnungen.

Die Erfindung wird anhand von in den Zeichnungen dargestellter Ausführungsbeispiele näher erläutert. Es zeigen
- Fig. 1: in Draufsicht und in schematischer Darstellung einen frontseitigen Kameraerfassungsbereich eines auf einer Straße fahrenden Kraftfahrzeugs,
- Fig. 2: in Draufsicht und in schematischer Darstellung zwei frontseitige Scheinwerfer-Ausleuchtbereiche eines Kraftfahrzeugs,
- Fig. 3: zeigt ein statisches Kamerabild mit markanten Umrissen/Geometrien zur Bildverarbeitung,
- Fig. 4: ein dynamisches Kamerabild mit markanten bewegten Umrissen/Geometrien zur Bildverarbeitung,
- Fig. 5: ein Kamerabild mit Bewegungsvektoren zur tendenziellen Richtungsänderung,
- Fig. 6: eine vereinfachte Darstellung eines erfindungsgemäßen Scheinwerfersystems in Form eines Blockdiagramms von der Bilderfassung bis zur Verstellung der Frontscheinwerfer,
- Fig. 7: ein Flußdiagramm mit Abhängigkeiten zur Beeinflussung der Kamera-Bilderfassung bis zur Ansteuerung der Frontscheinwerfer,
- Fig. 8: eine Ansteuerung von Aktuatoren/Stellgliedern zur mechanischen Verstellung von Scheinwerfern,
- Fig. 9: eine Ansteuerung von Leuchtmitteln in einem Scheinwerfer,
- Fig. 10: eine schematische Draufsicht auf einen Scheinwerfer mit Schwenkantrieb,

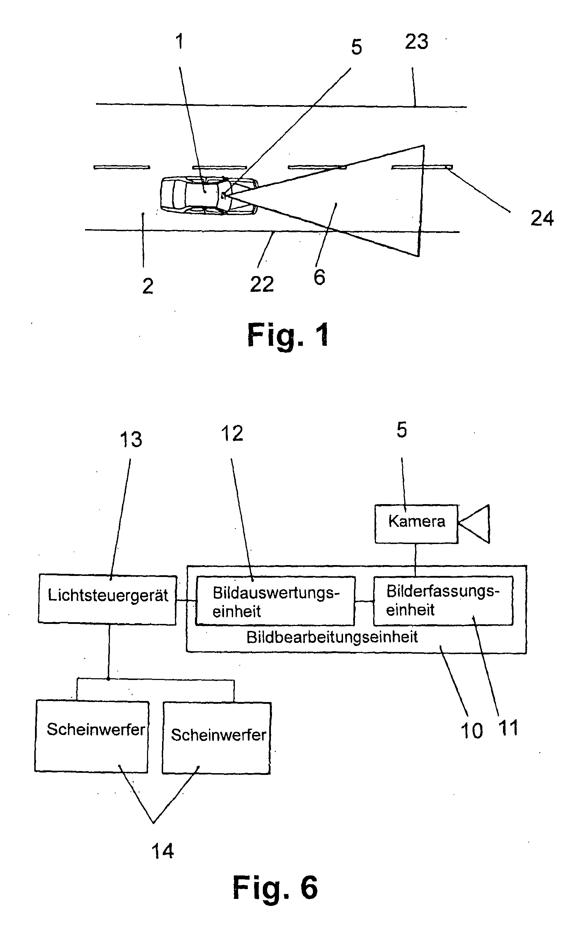

Figur 1 zeigt eine Draufsicht eines frontseitigen Kameraerfassungsbereichs 6 eines auf einer Straße 2 fahrenden Kraftfahrzeugs 1. Hierbei befindet sich eine optische Kamera 5 im oberen mittigen Bereich der Frontscheibe eines Kraftfahrzeuges 1. Diese Kamera 5 kann sich hinter der Frontscheibe und vorteilhaft im Bereich des fahrzeuginneren Rückspiegels befinden. Ebenso kann die Kamera 5 im Dachkantenbereich zwischen Dach und Frontscheibe oder im Bereich einer der A-Säulen des Kraftfahrzeuges 1 positioniert sein.

Der optische Erfassungsbereich 6 der Kamera 5 ist, wie in Figur 1 dargestellt, im Wesentlichen nur auf den vor dem Fahrzeug 1 befindlichen Bereich der Straße 2 so ausgerichtet, daß nur der rechte und der linke Fahrbahnrand 22, 23, sowie der mittig vor dem Fahrzeug 1 befindende Bereich beziehungsweise die mittlere Fahrbahnmarkierung 24 von der Kamera 5 erfaßt werden. Die Kamera 5 ist vorzugsweise so ausgebildet, daß sie Hindernisse auf der Fahrbahn erfassen kann, die größer als etwa 5 cm sind.

Bei einem vergrößerten Erfassungsbereich 6 wird ein weiter nach vorne ragender Bereich der Straße 2 sowie der unmittelbaren Straßenumgebung erfaßt. Hierbei werden nicht nur der rechte Fahrbahnrand 22 und die mittlere Fahrbahnmarkierung 24 erfaßt, sondern auch der linke Fahrbahnrand 23 sowie markante Umrisse beziehungsweise Geometrien 25, 26, die sich im unmittelbaren Erfassungsbereich des rechten beziehungsweise linken Straßenrandes 22, 23 befinden. Die Kamera 5 ist vorteilhaft so ausgebildet, daß sie Randbebauungen der Straße erfassen kann, die größer als etwa 40 cm sind.

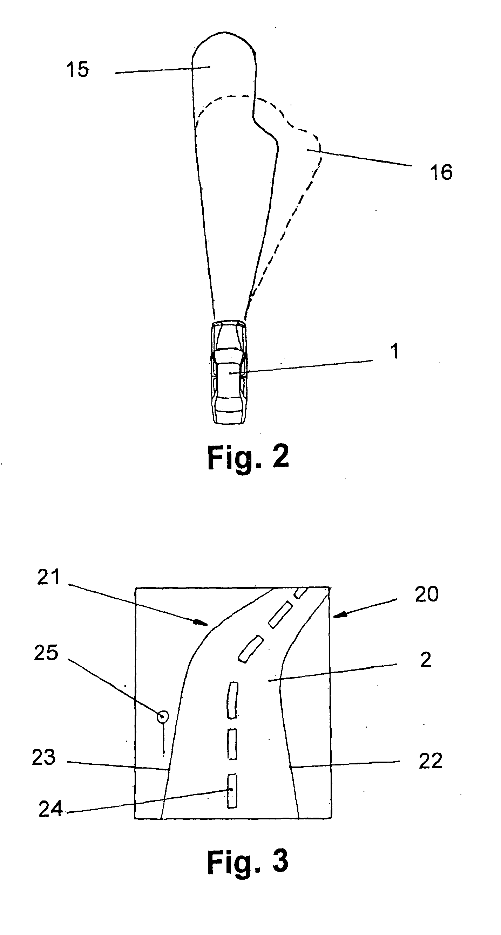

Figur 2 zeigt in Draufsicht zwei frontseitige Ausleuchtbereiche 15, 16 eines Kraftfahrzeuges 1. Der. Ausleuchtbereich 15 stellt die Ausleuchtung bei Geradeausfahrt des Fahrzeuges 1 dar. Entsprechend der Fahrgeschwindigkeit des Fahrzeuges 1 wird dieser Ausleuchtbereich 15 für Geradeausfahrt entsprechend variabel in seiner Erstreckung der Ausleuchtung vor dem Fahrzeug 1 projiziert werden. Bei steigender oder höherer Geschwindigkeit wird der vor dem Fahrzeug 1 sich erstreckende Ausleuchtbereich 15 vergrößert. Bei langsamerer Fahrt beziehungsweise bei zu erwartenden Abbiegungen oder Kurvenfahrten wird in Abhängigkeit von der Geschwindigkeit der Ausleuchtbereich 15, 16 in seiner Form und/oder Ausleuchtweite (Erstreckung) verändert. Beispielsweise wird bei einer Rechtskurve oder Abbiegung nach rechts der Ausleuchtbereich 16 für den rechten Straßenrand 22 entsprechend der zu fahrenden Kurve (Abbiegung) zu dieser Seite hin vergrößert. Da bei Kurvenfahrten beziehungsweise Abbiegevorgängen die Geschwindigkeiten der Fahrzeuge reduziert werden, kann der Ausleuchtbereich 15 für die Geradeausfahrt entsprechend verkürzt werden.

Figur 3 zeigt eine schematische Darstellung eines Kamerabildes 20. In dieser Abbildung sind als markante Umrisse/Geometrien die Straßenränder als linker und rechter Straßenrand 22, 23 abgebildet. Als ein weiteres markantes Merkmal ist seitlich am linken Straßenrand 23 ein Verkehrszeichen 25 abgebildet. In dem hier gezeigten Beispiel ist der Straßenverlauf 21 im oberen Teil des Kamerabildes 20 nach rechts abknickend dargestellt.

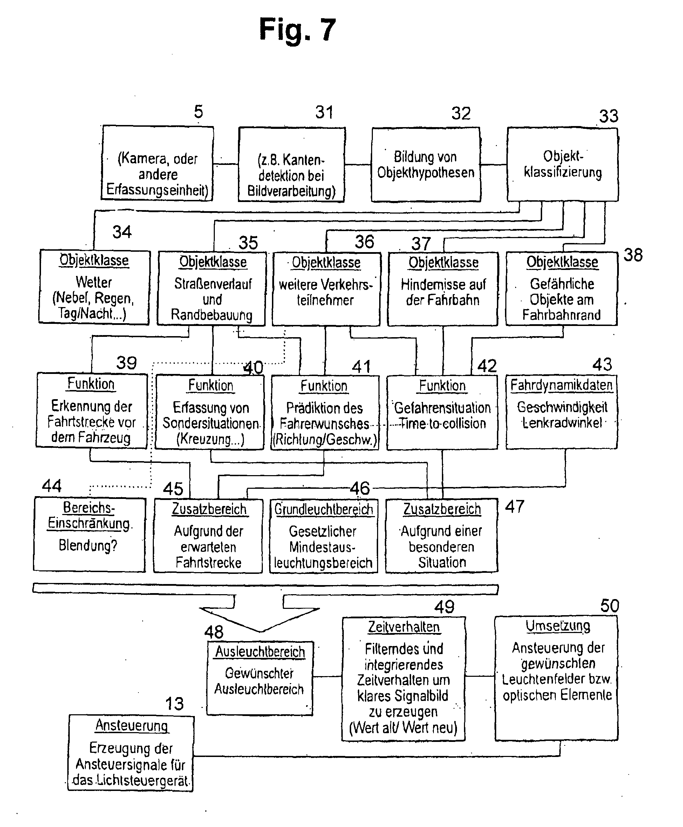

Die Abbildung in Figur 3 entspricht einem Momentanbild, das von der im Fahrzeug 1 befindlichen Kamera 5 erzeugt wird. Für die Auswertung in einer Bilderfassungseinheit 11 (Fig. 6) werden von diesem Kamerabild 20 nur die markanten Umrisse als Kanten erfaßt, so daß hierbei ein reines Kantenbild entsteht. Dies ist für die weitere Bearbeitung in einer Bildbearbeitungseinheit 10 notwendig, da zur Erfassung markanter Umrisse nur Helligkeitssprünge mit entsprechenden unterschiedlichen Kontrasten auswertbar sind.

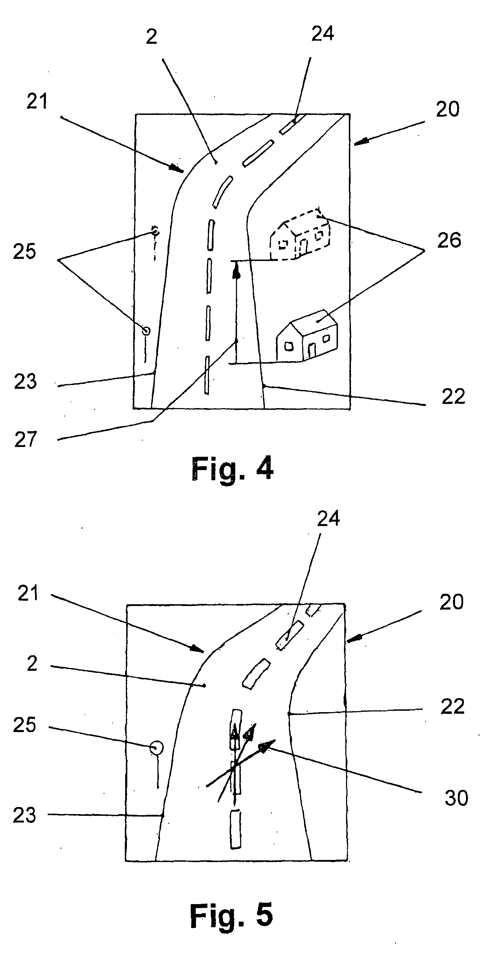

In Figur 4 ist ein Kamerabild 20 mit einer Straße 2 und markanten Gegenständen 25, 26 im Randbereich der Straße abgebildet. Hier ist sehr gut zu erkennen, welche Voraussetzungen für die Bildbearbeitungseinheit 10 notwendig sind. Die markanten Gegenstände 25, 26, die in diesem Fall beispielhaft ein am rechten Straßenrand dargestelltes Gebäude 26 und ein am linken Straßenrand befindliches Verkehrszeichen 25 sind, sind in zwei aufeinander folgenden Positionen zu erkennen. Es wird hiermit gezeigt, daß Veränderungen der markanten Gegenstände 25, 26, wie das Gebäude 26 und das Schild 25, und der Straßenverlauf 21 zueinander für die Bildverarbeitung notwendig sind. Der Abstand zwischen solchen markanten Gegenständen 25, 26 kann in der Bildbearbeitungseinheit 10 sowohl zeitlich wie auch in der Bewegungsrichtung identifiziert und bearbeitet werden.

Auf diese Art und Weise wird die Bewegungsrichtung 27 und somit die zurückgelegte Strecke 27 über die Bildbearbeitungseinheit 10 erfaßt. Sollte nun abweichend von der Darstellung in Figur 4 ein markanter Gegenstand 25, 26, wie zum Beispiel das am rechten Straßenbahnrand befindliche Gebäude 26, sich in seiner Bewegungsrichtung 27 und somit in der Wahrnehmung seiner geometrischen Veränderung zu einer Seite des Kamerabildes 20 hin verschieben, wird die Bildbearbeitungseinheit 10 somit eine Richtungsänderung identifizieren.

Die Häufigkeit der zur Auswertung aufgenommen Kamerabilder 20 ist ebenso von großer Bedeutung, da bei hohen Fahrgeschwindigkeiten die Abstände der markanten Gegenstände 25, 26 bei gleichbleibender Bildaufnahmesequenz entsprechend größer sind. Es läßt sich somit auch aus den Gegenständen 25, 26 Rückschlüsse auf die Fahrgeschwindigkeit ziehen.

Bei der Bildverarbeitung wird anhand der markanten Gegenstände 25, 26 nach gleichen oder sehr ähnlichen Merkmalen von einem Bild zum folgenden Bild gesucht. Die Veränderungen von Bild zu Bild sind in aller Regel geometrische Änderungen, die zum Beispiel bei einer Kamerabildsequenz von 30 Bildern in der Sekunde und bei einer Integration aller kleinen Änderungen zu einer größeren Änderung zu einem Richtungsvektor 30 der aktuellen Bewegung des Fahrzeuges 1 führen. Diese große Änderung beschreibt den momentanen Bewegungs- beziehungsweise Geschwindigkeitsvektor 30. Bei einer seitlichen Veränderung der markanten Gegenstände 25, 26 wird die Bildbearbeitungseinheit 10 einen Richtungswechsel und somit einen Richtungsvektor 30 identifizieren. Dieser Richtungsvektor 30 ist die Integration von geometrischen Änderungen bei der seitlichen Verschiebung von einem Bild zum nächsten aufgenommenen Bild.

Bei einer normalen Kurvenfahrt werden sich diese seitlichen Veränderungen als geringe Veränderungen auswerten lassen. Sollte nun ein abrupter Richtungswechsel, wie zum Beispiel ein Abbiegen in eine andere Straße, erfolgen, so wird der Richtungsvektor 30 durch die seitlichen geometrischen Änderungen der markanten Gegenstände 25, 26 eine extrem große Veränderung zur Seite hin erfahren.

Es ist somit möglich, anhand von im Wesentlichen vor dem Fahrzeug 1 befindlichen Veränderungen von markanten Gegenständen 25, 26 eine Richtungsänderung zu erkennen und diese Richtungsänderung als Berechnungsergebnis einer Bildbearbeitungseinheit 10 einen Bewegungsvektor/Geschwindigkeitsvektor 30 mit der entsprechenden veränderlichen Richtung zu ermitteln. Dies geschieht in der beschriebenen Weise für einen Bereich (Straßenverlauf 21), der sich hauptsächlich vor dem Fahrzeug 1 befindet. Entsprechend der Fahrgeschwindigkeit des Fahrzeuges 1 ist es natürlich notwendig, daß der vor dem Fahrzeug 1 befindliche Bereich entsprechend einer höheren Geschwindigkeit weiter vorausschauend detektiert wird. Bei niedrigeren Geschwindigkeiten wird dann natürlich ein kleinerer Bereich entsprechend detektiert werden. Eine Darstellung des Bewegungsvektors 30, wie sich dieser zum Beispiel bei einer Kurvenfahrt einstellt, ist unter anderem in Figur 5 abgebildet.

In Figur 6 ist eine vereinfachte Darstellung des Scheinwerfersystems in Form eines Blockdiagramms von der Bilderfassung 11 durch den optischen Sensor 5 bis zur Verstellung der Frontscheinwerfer 14 dargestellt. Der optische Sensor 5, hier eine Kamera, erfaßt den vor dem Fahrzeug 1 befindlichen Sichtbereich. Die Kamera 5 ist in der Lage, beispielsweise 30 Bilder pro Sekunde an die Bilderfassungseinheit 11 zu liefern. In der Bilderfassungseinheit 11 werden, wie anhand der Figuren 3, 4 und 5 beschrieben, markante Gegenstände 25, 26, der Straßenverlauf 21 und dergleichen identifiziert. Es wird hierbei nach gleichen Merkmalen gesucht, die sich von Bild zu Bild hin verändert haben. Die Bilderfassungseinheit 11 führt die entsprechend aufbereiteten Bilder (markante Helligkeitssprünge, markante Gegenstände 25, 26 und dergleichen) der Auswerteeinheit 12 zu. Sie bereitet diese Bilder zusammen mit fahrzeugseitigen Daten, wie Geschwindigkeit des Fahrzeugs 1, Radumdrehungen, Lenkwinkeldaten und dergleichen, so auf, daß eine vorausschauende Aussage über den weiteren Straßenverlauf 21 beziehungsweise zu erwartende Richtungsänderungen gemacht werden kann.

Die Bilderfassungseinheit 11 und die Auswertungseinheit 12 bilden die Bildbearbeitungseinheit 10. Nach einer beispielsweise geplanten Richtungsänderung wird von der Bildbearbeitungseinheit 10 ein entsprechendes Signal an ein Lichtsteuergerät 13 gesandt. Dieses Signal wird von dem Lichtsteuergerät 13 ausgewertet, das ein entsprechendes Ansteuersignal an die Frontscheinwerfer 14 liefert. Mit dem Ansteuersignal werden Verstellmotoren angesteuert. Sie schwenken die Frontscheinwerfer 14 in die Richtung des Fahrtrichtungswechsels bzw. richten sie so aus, daß eine entsprechend dem Fahrbahnverlauf 21 (gewünschte Fahrtrichtungsänderung) und der aktuellen Geschwindigkeit angepaßte Leuchtweite eingestellt wird.

Zur Verdeutlichung der komplexen Zusammenhänge von Bilderfassungseinheit 11 und Bildauswertungseinheit 12 ist in Figur 7 ein Flußdiagramm der gesamten Bildbearbeitungseinheit 10 mit Abhängigkeiten zu den Beeinflussungen ausgehend von der Kamerabilderfassung 11 bis zur Ansteuerung der Frontscheinwerfer 14 beispielhaft abgebildet. Aus dem Diagramm wird deutlich, daß die umfeldspezifischen Daten mit den fahrzeugspezifischen Daten, wie Lenkwinkel, Geschwindigkeit, verknüpft werden. Dadurch ist eine zuverlässige Scheinwerferregelung gewährleistet.

Von der Kamera 5 wird das Bild vor dem Fahrzeug 1 erfaßt und aufgenommen. Selbstverständlich können außer optischen Kamerasystemen auch andere Systeme zum Einsatz gelangen. Hierbei kann es sich zum Beispiel um Ultraschallsysteme, Radarsysteme oder Lasersysteme handeln. Alle diese Systeme sind geeignet, um Meßdaten für eine Verarbeitung zu erfassen beziehungsweise hierfür geeignete notwendige Daten zu liefern. Bei den so erfaßten Daten handelt es sich um umfeldspezifische Daten, da sie Aussagen über das Umfeld außerhalb des Kraftfahrzeuges machen.

Im nächsten Schritt werden aus diesen Daten/Bildern zum Beispiel Kanten 31 detektiert oder andere markante Gegenstände 25, 26 identifiziert. Dieser Vorgang wiederholt sich von Bild zu Bild, wobei die so aufbereiteten Bilddaten in einem weiteren Schritt zu einer Objekthypothese 32 zusammengeführt werden. Bei dieser Objekthypothese 32 wird versucht, einzelne markante Punkte oder Kanten mit ähnlichen Merkmalen aus mehreren aufeinanderfolgenden Bildern zum Objekt zusammenzufassen. Wurde eine Objekthypothese, zum Beispiel Kante 22 längs zum Fahrzeug (Fig. 4), innerhalb eines Bereichs von 0 bis 2 m rechts vom Fahrzeug über mehrere Bilder/Messungen hinweg bestätigt, kann eine Objektklassifizierung 33 (Fig. 7), in diesem Fall als Fahrbahnbegrenzung/Markierung 35 erfolgen. Daraus kann dann unter anderem der Straßenverlauf vor dem Fahrzeug 39 abgeleitet und zum Beispiel ein Zusatzbereich aufgrund einer Kurve 45 innerhalb des Ausleuchtbereichs 48 aktiviert werden, falls diese erkannte Kante 22 (Fig. 4) einen rechts abknickenden Straßenverlauf vermuten läßt.

Hierbei können sich viele verschiedene Möglichkeiten ergeben. Es ist zum Beispiel möglich, daß bei hoher Geschwindigkeit eine Kurve mit großem Kurvenradius befahren werden soll oder eine Kreuzung mit einer Möglichkeit, nach links oder rechts abzubiegen, vorliegt.

Diese Möglichkeiten werden in dem Schritt Objektklassifizierung 33 entsprechend identifiziert und zusammengefaßt. Dieser Verarbeitungsschritt führt zu einer Vielzahl von Objektklassen 34 bis 38, die entsprechende zusammengeführte Informationen und Daten weiterverarbeiten.

Es gibt zum Beispiel eine Objektklasse 34, welche die Umweltrandbedingungen, wie Nebel, Regen, Tag oder Nacht, erfaßt. Eine weitere Objektklasse 35 verarbeitet überwiegend den Straßenverlauf 21 sowie die zugehörigen Randbedingungen, wie z.B. die Randbebauung, während eine weitere Objektklasse 36 alle Daten und Informationen über weitere Verkehrsteilnehmer (vorausfahrende Fahrzeuge oder entgegenkommende Fahrzeuge) identifiziert. In der Objektklasse 37 werden Hindernisse auf der Fahrbahn erkannt. Dies können z.B. verloren gegangene Gegenstände oder abgestellte Fahrzeuge/Gegenstände sein. In einer weiteren Objektklasse 38 ist es möglich, gefährliche Objekte am Fahrbahnrand zu identifizieren. Solche gefährlichen Objekte können zum Beispiel von der Seite sich nähernde Fahrzeuge oder Personen sein. Alle diese Objektklassen 34 bis 38 werden entsprechend üblicher Bildverarbeitungsalgorithmen und in aller Regel zu erwartenden logischen Zusammenhängen generiert. Die Blöcke 39 bis 43 beschreiben Funktionen für das erfindungsgemäße System, die aus den Objektklassen 34 bis 38 abgeleitet werden können. Aus den abgeleiteten Funktionen 39 bis 43 sowie den Objektklassen 34, 36 können zum Beispiel über ein erfindungsgemäßes Kennfeld die Ausleuchtbereiche 44 bis 47 ermittelt und zum Ausleuchtbereich 48 zusammengefaßt werden. Dies ergibt dann vorteilhaft für die in Fig. 3 dargestellte Straßenverlaufszene den in Fig. 2 mit 16 markierten Ausleuchtbereich.

Diese Funktionseinheiten 39 bis 43 sind in der Lage, die in den Objektklassen 34 bis 38 zusammengefaßten Informationen und Daten detaillierter und somit für die gewünschte Reaktion entsprechend auszuwerten. Hierbei können beispielsweise in der Funktion 39 Verkehrsteilnehmer vor dem eigenen Fahrzeug 1 identifiziert, in der Funktion 40 Sondersituationen, wie Kreuzungen, oder in der Funktion 41 ein Fahrerwunsch (gewählter Fahrtrichtungsanzeiger, Geschwindigkeit) näher spezifiziert werden. Die Funktionseinheiten 39 bis 41 werden unter anderem aus der Objektklasse 35 ermittelt. Der Objektklasse 36 sind die Funktionseinheiten 41 und 42 zugeordnet. In der Funktion 42 werden beispielsweise Gefahrensituationen vor einer drohenden Kollision erkannt. Dementsprechend ist die Funktion 42 nicht nur mit der Objektklasse 36, sondern auch mit den Objektklassen 37 und 38 verknüpft. In der Funktion 43 werden Fahrdynamikdaten, also fahrzeugspezifische Daten, wie Geschwindigkeit und Lenkwinkel, erfaßt und vorteilhaft mit weiteren Daten aus dem Fahrzeug verbessert. Alle diese Funktionen 39 bis 43, die in einer für das erfindungsgemäße System vorteilhaften Verarbeitung vorliegen, werden nun vorteilhaft über ein Kennfeld Leuchtbereichen 44 bis 47 zugewiesen.

Zum Beispiel wird eine Bereichseinschränkung 44 in bezug auf Blendung entgegenkommender Fahrzeuge überprüft. Die Bereichseinschränkung 44 wird aus der Objektklasse 36 ermittelt. Ein Zusatzbereich 45, der mit den Funktionen 39, 41, 43 verknüpft ist, ermöglicht zusätzliche Leuchtbereiche, bedingt durch typische, auf der Fahrtstrecke zu erwartende Randbedingungen. Hierbei kann es sich beispielsweise um eine Fahrstrecke, wie in Fig. 3 dargestellt, handeln. Hier wird zusätzlich zu einem gesetzlichen Mindestausleuchtbereich ein Zusatzbereich 16 (Fig. 2) für Kurvenfahrt aktiviert.

In dem Grundausleuchtungsbereich 46 wird sichergestellt, daß alle bisher ermittelten und ausgewerteten Daten einem gesetzlichen Mindestausleuchtungsbereich entsprechen und somit keine hiervon abweichenden Ausleuchtungsbereiche eingestellt werden können, zum Beispiel Überlappungsbereich 15, 16 in Fig. 2.

Ein weiterer Zusatzbereich 47, der mit den Funktionen 40 und 42 verknüpft ist, ermöglicht besondere Zusatzbereiche aufgrund besonderer Situationen, wie beispielsweise in der vorher beschriebenen Funktion 42 beschrieben. Hierbei werden identifizierte Gefahrensituationen, wie mögliche Kollisionen, berücksichtigt. Dies kann zum Beispiel bedeuten, daß auf der Fahrbahn liegende Gegenstände oder von der Seite auf die Fahrbahn zukommende Objekte, zum Beispiel Wild oder Fußgänger, gezielt beleuchtet werden, um den Fahrer entsprechend zu warnen, auch wenn diese Objekte außerhalb des aufgrund der Verkehrssituation ermittelten Ausleuchtbereiches liegen. Die über die Objektklassen 34 bis 38, die Funktionen 39 bis 43 und die Bereiche 44 bis 47 bearbeiteten Daten der Bildbearbeitungseinheit 10 werden in einer Einheit 48 so zusammengefaßt, daß aus allen für die momentane Situation zutreffenden Bedingungen ein gewünschter Ausleuchtbereich ermittelt wird. Es werden auf diese Weise die umfeldspezifischen und die fahrzeugspezifischen Daten so miteinander verknüpft, daß je nach Verkehrssituation und/oder Umfeldsituation der notwendige Ausleuchtbereich ermittelt wird.

Um Irritationen oder Fehlinterpretationen anderer Verkehrsteilnehmer zu vermeiden (z.B. Verwechseln mit Lichthupe), dürfen Änderungen nur langsam erfolgen. Hierbei werden die Signale über einen bestimmten Zeitablauf entsprechend gefiltert beziehungsweise integriert (Funktion 49). Es wird somit möglich, eine für Fahrer und andere Verkehrsteilnehmer nicht erkennbare Nachführung des Ausleuchtbereichs zu ermöglichen. Hierbei werden entsprechend dem zeitlichen Verhalten alte und neue Werte so integriert, daß ein klares Signalbild erzeugt wird.

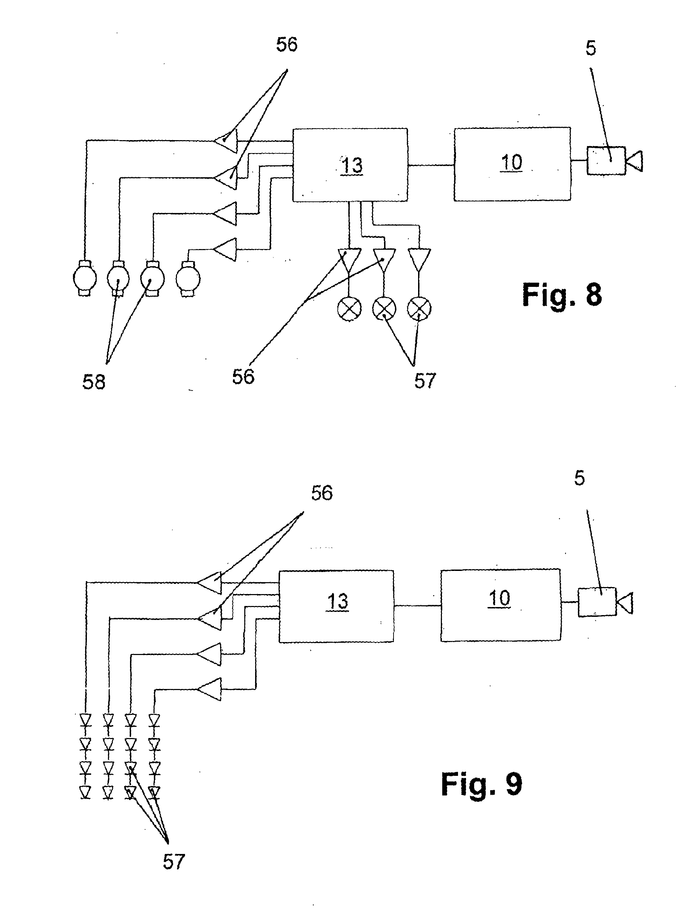

In einem nachfolgenden Schritt der Umsetzung 50 werden die Signale so aufbereitet, daß eventuelle Leuchtenfelder 57 oder optische Elemente beziehungsweise Stellglieder 58 (Fig. 8) angesteuert werden können. Folgend auf diese Umsetzung 50 ist als Ansteuerung das Lichtsteuergerät 13 vorgesehen. Hierbei werden die entsprechenden Signale für die direkte Ansteuerung von Stellgliedern 58 oder Leuchtfeldern 57 zum Beispiel in Form von getakteten Strömen direkt an die Scheinwerfer 14 weitergeleitet.

Die Art und Weise der Ansteuerung von Leuchtmitteln 57, optischen Elementen oder Stellgliedern 58 (Aktuatoren) ist in den Figuren 8 und 9 detaillierter dargestellt.

In Figur 8 wird beispielsweise das von der Bildbearbeitungseinheit 10 bereitgestellte Signal im Lichtsteuergerät 13 so bearbeitet, daß nachfolgenden Leistungstreibern 56 (Leistungsstufen) die direkte Ansteuerung von Aktuatoren 58 und/oder die direkte Ansteuerung von Leuchtmitteln 57 ermöglicht wird.

Die Verwendung von Leistungstreibern 56 ist notwendig, da die von der Bildbearbeitungseinheit 10 zur Verfügung gestellten Daten keine direkte Ansteuerung von Motoren, Aktuatoren 58 oder Leuchtmitteln 57 direkt ermöglichen. Hierzu sind höhere Ströme und Spannungen nötig, als sie üblicherweise in elektronischen Auswerte- und Bearbeitungseinheiten zur Verfügung gestellt werden. Wie in Figur 8 zu erkennen, können beispielsweise parallel geschaltete Aktuatoren 58 angesteuert werden, die ihrerseits ein Schwenken von Reflektoren oder auch ganzen Leuchtmittelgruppen 57 ermöglichen. Parallel zu diesem Schwenkvorgang ist es möglich, daß zusätzliche, parallel geschaltete Leuchtmittel 57 für eine weitere seitliche Ausleuchtung über weitere Leistungstreiber 56 hinzugeschaltet werden können oder für die Änderung der Leuchtweite benötigt werden.

In Figur 9 ist ein ähnliches Prinzip wie in Figur 8 beschrieben abgebildet. Hierbei werden vom Lichtsteuergerät 13 die Signale über die parallel geschalteten Leistungstreiber 56 an Leuchtenfelder 57 weitergeleitet. Diese Leuchtenfelder 57 können zusammengeschaltete Leuchtmittel 57, wie beispielsweise LEDs, sein, die in Reihe geschaltet sind. Entsprechend dem Zuoder Abschalten solcher Leuchtenfelder 57 kann ein unterschiedlicher Bereich vor dem Fahrzeug 1 beziehungsweise seitlich des Fahrzeuges 1 ausgeleuchtet werden.

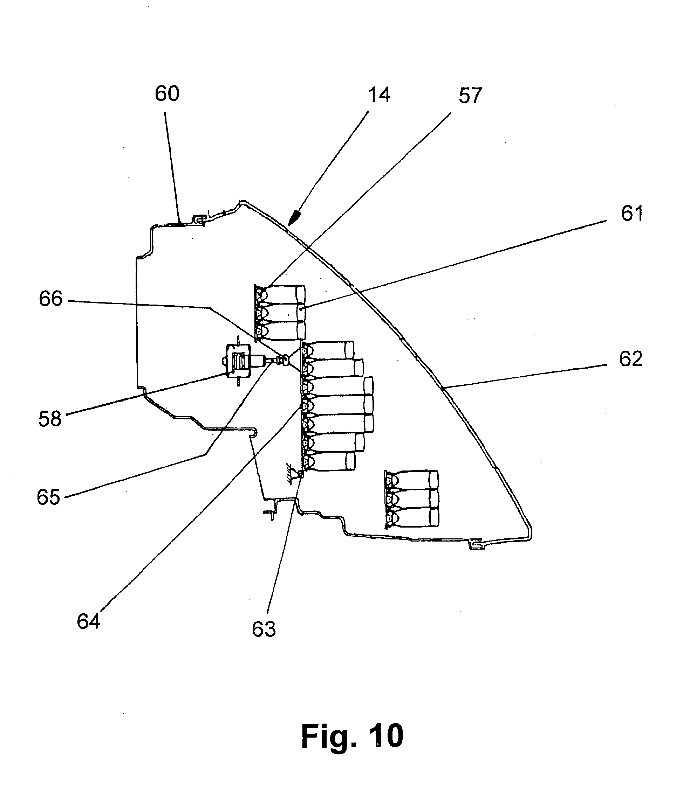

Bezugnehmend auf die Stellglieder 58 (Aktuatoren) ist in Figur 10 der Schwenkantrieb einer Leuchteneinheit in einem Scheinwerfer 14 beispielhaft dargestellt. Es handelt sich hierbei um eine schematische Draufsicht auf einen Scheinwerfer 14; der in einer mittleren Baugruppe angeordnete Leuchtmittel 57 mit zugehörigen Optiken 61 aufweist, wobei die Leuchtmittel 57 und die zugehörigen Optiken 61 auf einem gemeinsamen Leuchtmittelträger 64 angeordnet sind. Das hierbei austretende Licht wird durch die Lichtscheibe 62 auf die Fahrbahn 2 emittiert.

Bei einer Identifikation einer Fahrtrichtungsänderung wird nach der Erfassung von Bildern und den zugehörigen ausgewerteten Daten in der Bildbearbeitungseinheit 10 ein entsprechendes Signal an das Lichtsteuergerät 13 gesandt. Dieses Lichtsteuergerät 13 steuert beispielsweise wie in Figur 10 abgebildet einen Stellmotor an, der beispielsweise über eine Zug-DruckStange 65 und ein Gelenk 66 den Leuchtmittelträger 64 um eine Schwenkachse 63 entsprechend der gewünschten Fahrtrichtungsänderung schwenkt. Die komplette Einheit wie in Figur 10 abgebildet kann vollständig innerhalb des Scheinwerfers 14 integriert werden. Es handelt sich somit um eine geschlossene Einheit, die nur über entsprechende Leitungen oder Bussysteme von der Bildbearbeitungseinheit 10 und dem Lichtsteuergerät 13 angesteuert werden muß.

Die Ausleuchtbereiche sind vorzugsweise an die aktuellen ECE-Regelungen angelehnt.

Die Auswertung von Sensorsignalen ist bekannt, z.B. Bilder mittels Bildverarbeitung oder das sogenannte "machine Vision". Auch der Aufbau und die Auswertung von RADAR- oder LIDAR-Sensoren sind bekannt. Es ist auch Standardsoftware bekannt, mit der u.a. automatisch Softwarecode zur Bildauswertung/Bildverarbeitung generiert werden kann.

Das Scheinwerfersystem hat wenigstens einen Sensor, zum Beispiel einen CMOS-Kamerachip, mit vorgesetzter Optik und wenigstens eine Auswerteeinheit (Rechner), vorzugsweise einen digitalen Signalprozessor, auf dem eine Datenauswertung, vorzugsweise eine Bildauswertung, stattfindet. Aus den ermittelten Daten (Straßenverlauf usw.) wird der ideale Ausleuchtbereich, vorzugsweise gemäß ECE-Richtlinie, berechnet und über die Aktuatoren eingestellt. Zusätzlich erfolgt die Außenbeschaltung (Spannungsaufbereitung/Spannungsversorgung, Leistungstreiber für die Aktuatoren usw.), wie schematisch und beispielhaft in den Fig. 8 und 9 dargestellt ist. Die Funktion wird komplett in Software realisiert (Fig. 7).

## Patentansprüche

1. Scheinwerfersystem für Fahrzeuge, vorzugsweise für Kraftfahrzeuge, mit mindestens einem verstellbaren Scheinwerfer, mit einer Vorrichtung zur Erfassung des Straßenverlaufs, die wenigstens einen bildgebenden Sensor mit einer Bildbearbeitungsvorrichtung und einem Lichtsteuergerät enthält und über den bildgebenden Sensor ermittelte Bilder/Daten mittels der Bildbearbeitungsvorrichtung und dem Lichtsteuergerät Signale an Stellglieder oder Leuchtmittel der Scheinwerfer zur Veränderung der Richtung der emittierenden Strahlen leitet,
**dadurch gekennzeichnet, daß** die Bildbearbeitungsvorrichtung (10) aus den vom bildgebenden Sensor (5) ermittelten Bilder/Daten mindestens ein Signal erzeugt, das eine Vorhersage des Straßenverlaufs (21) ermöglicht und dem Lichtsteuergerät (13) zuführbar ist, das an die Stellglieder (58) Signale zur vorausschauenden Richtungsänderung der emittierenden Lichtstrahlen des Scheinwerfers (14) sendet.

2. Scheinwerfersystem, insbesondere nach Anspruch 1,
**dadurch gekennzeichnet, daß** die von der Bildbearbeitungsvorrichtung (10) erfaßten Umfeldbilder/Daten mit fahrzeugspezifischen Daten verknüpft und ein Signal erzeugt wird, das an die Stellglieder (58) Signale zur vorausschauenden Richtungsänderung der emittierenden Lichtstrahlen des Scheinwerfers (14) sendet.

3. Scheinwerfersystem nach Anspruch 1 oder 2,
**dadurch gekennzeichnet, daß** die durch den bildgebenden Sensor (5) ermittelten Bildern/Daten in helle und dunkle Randkonturen durch die Bildbearbeitungsvorrichtung (10) umgewandelt werden und vorteilhaft markante und statisch bestimmte Gegenstände (25, 26) enthalten.

4. Scheinwerfersystem nach einem der Ansprüche 1 bis 3,
**dadurch gekennzeichnet, daß** die durch den bildgebenden Sensor (5) ermittelten Bildern/Daten durch die Bildbearbeitungseinheit (10) in einen Bewegungsvektor (30) und/oder in einen Geschwindigkeitsvektor (30) umgewandelt werden.

5. Scheinwerfersystem nach einem der Ansprüche 1 bis 4,
**dadurch gekennzeichnet, daß** die durch den bildgebenden Sensor (5) ermittelten Bildern/Daten durch die Bildbearbeitungsvorrichtung (10) eine in der Weite und in der Breite veränderliche Ausleuchtung (15, 16) bewirken.

6. Scheinwerfersystem nach Anspruch 5,
**dadurch gekennzeichnet, daß** die Ausleuchtung (15, 16) in ihrer Weite und/oder in ihrer Breite in Abhängigkeit von der Fahrzeuggeschwindigkeit oder von umfeldbedingten Umgebungsbedingungen oder vom Straßenverlauf (21) oder von Randbebauungen oder von Hindernissen auf der Fahrbahn, die in ihren Abmessungen größer als 5 cm sind, oder von gefährlichen Objekten am Fahrbahnrand, veränderbar ist.

7. Scheinwerfersystem nach einem der Ansprüche 1 bis 6,
**dadurch gekennzeichnet, daß** der bildgebende Sensor (5) eine optische Kamera oder eine Laserabtastvorrichtung oder eine Ultraschallabtastvorrichtung oder eine Radarabtastvorrichtung ist.

8. Scheinwerfersystem nach einem der Ansprüche 1 bis 7,
**dadurch gekennzeichnet, daß** der detektierende Bereich (6) des bildgebenden Sensors (5) in seiner Weite und/oder in seiner Breite von der Geschwindigkeit des Fahrzeugs (1) oder von der Bewegungsrichtung und Geschwindigkeit des Fahrzeugs (1) oder von umfeldbedingten Umgebungsbedingungen oder vom Straßenverlauf (21) oder von Randbebauungen oder von Hindernissen auf der Fahrbahn, die in ihren Abmessungen größer als 5 cm sind, oder von gefährlichen Objekten am Fahrbahnrand (22, 23), abhängig ist.

9. Scheinwerfersystem nach einem der Ansprüche 1 bis 8,
**dadurch gekennzeichnet, daß** die in ihrer Weite und/oder Breite veränderliche Ausleuchtung (15, 16) durch Schwenken des Scheinwerfers (14) und/oder von Baugruppen des Scheinwerfers (14), wie Reflektoren, Spiegel oder Leuchtmitteln (57), erfolgt.

10. Scheinwerfersystem nach einem der Ansprüche 1 bis 8,
**dadurch gekennzeichnet, daß** die in ihrer Weite und/oder Breite veränderliche Ausleuchtung (15, 16) durch stufenloses oder gestuftes Zu-oder Abschalten von Leuchtmitteln(57) und/oder durch Zu- oder Abschalten von weiteren Scheinwerfern (14) erfolgt.
